**Europäisches Patentamt**

**European Patent Office**

**Office européen des brevets**

(19)

(11) Publication number : **0 484 105 A2**

(12)

# EUROPEAN PATENT APPLICATION

(21) Application number : **91309983.4**

(22) Date of filing : **29.10.91**

(51) Int. Cl.$^5$ : **C08L 67/00,** // (C08L67/00, 23:02)

(30) Priority : **02.11.90 JP 297924/90**

(43) Date of publication of application :
**06.05.92 Bulletin 92/19**

(84) Designated Contracting States :
**AT BE CH DE DK ES FR GB GR IT LI LU NL SE**

(71) Applicant : **POLYPLASTICS CO. LTD.**
**3-13, Azuchicho, 2-chome**
**Chuo-Ku Osaka-shi Osaka 541 (JP)**

(72) Inventor : **Murakami, Harugi**
**885-11 Miyajima**
**Fuji-Shi, Shizuoka (JP)**
Inventor : **Yokouchi, Mitsuru**
**324, Miyashita**
**Fuji-Shi, Shizuoka (JP)**
Inventor : **Miura, Masaru**
**4-3-12, Kanbara Kanbara-cho**
**Ihara-gun, Shizuoka (JP)**
Inventor : **Kobayashi, Kazuhito**
**2276-1 Minami-Matsuno, Fujikawa-cho**
**Ihara-gun, Shizoka (JP)**

(74) Representative : **W.P. THOMPSON & CO.**
**Coopers Building, Church Street**
**Liverpool L1 3AB (GB)**

(54) **Thermoplastic polyester resin composition.**

(57)    The invention is concerned with thermoplastic polyesters, such as, for example, polyalkylene terephthalates.

These polyesters have a low crystallization rate at low temperatures and consequently are not utilised in moulding.

To allow moulding with a low temperature it is desirable to lower the crystallization rate of these polyesters.

This is achieved by the production of a thermoplastic composition which comprises

(A) 100 parts by weight of a thermoplastic polyester resin ; and

(B) 0.001 - 25 parts by weight of a salt of an $\alpha$-olefin-unsaturated carboxylic acid copolymer ($\beta$).

Preferably, some of the carboxylic acid groups of the $\alpha$-olefin-unsaturated carboxylic acid copolymer ($\beta$) are esterified giving rise to a partially esterified copolymer ($\alpha$).

The thermoplastic polyester (A) used in the present invention is not critical and includes, for example, homopolyesters and copolyesters which are obtained by polycondensation of dicarboxylic acid compounds and dihydroxy compounds, by polycondensation of oxycarboxylic acid compounds,or by polycondensation of mixtures of any of these three ingredients. These may be used singly or in combination. The effect of the additive (B ingredient) of the invention is particularly advantageous with regard to polyethylene terephthalate, which is low in the crystallization temperature and slow in the crystallization rate. The copolymerized polyesters preferably contain not less than 80 mole %, preferably not less than 90 mole %, of recurring unit of ethylene terephthalate.

EP 0 484 105 A2

The present invention relates to thermoplastic polyester resin compositions. More particularly, it relates to thermoplastic polyester resin compositions which are so high in crystallization rate that the composition is mouldable in a low temperature mould with an improved moulding cycle.

Thermoplastic polyesters such as, for example, polyalkylene terephthalates are important as starting materials, in the production of for example, fibres, films and moulded articles. These resins have a partial crystallization structure and, therefore exhibit good properties such as a high wear resistance, a favourable creeping property and a high dimensional accuracy. Accordingly, the resins are particularly suitable for the manufacture of moulded articles which undergo severe mechanical stress and are exposed to severe heat conditions. Among the resins, polyethylene terephthalate has wide utility in the fields of fibres, films, bottle making and the like because of its excellent properties. In the field of injection moulding, however, although polyethylene terephthalate has the potential to be an excellent moulding material, it has not been in wide use. This is because the polyethylene terephthalate has a low crystallization rate at low temperatures. For instance, when the mould temperature is set at about 100°C at the time of injection moulding, the crystallization rarely proceeds, resulting in very poor mechanical properties, dimensional stability and appearance of the resultant article. In order to increase the crystallization rate, it is necessary to keep the mould temperature at a level not lower than 160°C. Such a high mould temperature is not favourable from the standpoint of the production efficiency.

To overcome the above drawbacks, various techniques have been proposed.

For instance, Japanese Laid-open Patent Application Nos. 60-233149 and 61-57643 propose mixing with polyethylene terephthalate organic polymers having groups of the general formulas, $-(^1RO)_n-R^2$ and $-COOM$, singly or in combination with other ingredients.

Japanese Laid-open Patent Application No. 56-103237 proposes mixing, with thermoplastic polyesters, $\alpha$-olefin-maleic anhydride copolymers or hydrolytically ring-opened modified products thereof or $\alpha$-olefin-$\alpha,\beta$-unsaturated carboxylic mono or dialkyl ester copolymers.

In these processes, the mould temperature is limited to approximately 90 - 100°C. However, the mixing of the above-mentioned polymers lowers the impact strength of the polyethylene terephthalate resin.

On the other hand, with polyesters other than polyethylene terephthalate, the polyesters generally have a higher crystallization rate.

However, there is a recent trend toward moulding with a low temperature mould so as to increase the moulding cycle, and consequently it is desirable to further improve the crystallization rate of these polyester resins.

This is achieved by the provision of a thermoplastic polyester resin composition which comprises:

(A) 100 parts by weight of a thermoplastic polyester resin; and

(B) 0.001 - 25 parts by weight of a salt of an $\alpha$-olefin-unsaturated carboxylic acid copolymer ($\beta$).

Preferably, some of the carboxylic acid groups of the $\alpha$-olefin-unsaturated carboxylic acid copolymer ($\beta$) are esterified giving rise to a partially esterified copolymer ($\alpha$).

The thermoplastic polyester (A) used in the present invention is not critical and includes, for example, homopolyesters and copolyesters which are obtained by polycondensation of dicarboxylic acid compounds and dihydroxy compounds, by polycondensation of oxycarboxylic acid compounds, or by polycondensation of mixtures of any of these three ingredients. These may be used singly or in combination. The effect of the additive (B ingredient) of the invention is particularly advantageous with regard to polyethylene terephthalate, which is low in the crystallization temperature and slow in the crystallization rate. The copolymerized polyesters preferably contain not less than 80 mole %, preferably not less than 90 mole %, of recurring unit of ethylene terephthalate.

Copolymerizable ingredients may be any known acid ingredient and/or glycol ingredient. Examples of the copolymerizable ingredient include acids such as isophthalic acid, naphthalene-2,6-dicarboxylic acids, adipic acid, diphenyl ether-4,4'-dicarboxylic acid, sebacic acid and the like, glycols such as propylene glycol, neopentyl glycol, diethylene glycol, cyclohexane dimethanol, 2,2-bis(4-hydroxyphenyl)-propane or polyalkylene glycols having a weight average molecular weight of 400 - 20000, and oxyacids such as p-oxybenzoic acid, p-hydroxyethoxybenzoic acid and the like. It will be noted that the thermoplastic polyester should preferably have an intrinsic viscosity of not less than 0.5, more preferably not less than 0.55, when determined using a solution in a mixed solvent of phenol/tetrachloroethane (1/1 by weight) at 30°C. Moreover, there may be used mixtures composed of a major proportion of the thermoplastic polyesters mentioned above and a minor proportion of other type of thermoplastic resin not impeding the effect of the invention.

The additive used as the (B) ingredient of the invention is a salt of a partially esterified $\alpha$-olefin-unsaturated carboxylic acid copolymer ($\alpha$).

The term "salt of partially esterified $\alpha$-olefin-unsaturated carboxylic copolymer" is used to include an $\alpha$-olefin-unsaturated carboxylic copolymer wherein the carboxylic acid groups are partially esterified with an alcohol and non-esterified carboxylic acid groups are partially, totally or excessively neutralized with metal bases, ammonia, amines and, particularly, alkanolamines.

α-Olefins used to prepare the copolymers are not critical. For instance, although those olefins having a small number of carbon atoms such as ethylene, propylene and the like may be used, it is preferred to use those which have 6 - 40 carbon atoms. In most cases, α-olefins used in the present invention are linear aliphatic hydrocarbons, preferably unsubstituted hydrocarbons and mixtures thereof.

Examples of the starting acids or their derivatives which are used to prepare partially esterified α-olefin-unsaturated carboxylic acid copolymers include cis . unsaturated or trans . unsaturated ethylene dicarboxylic acids such as maleic acid, 2-methylmaleic acid, 2-chloromaleic acid, fumaric acid, itaconic acid, mesaconic acid, citraconic acid, aconitic acid and/or anhydrides thereof, or mixtures of these acids or their derivatives. If appropriate in amount, diester derivatives of these acids may be used.

The preparation process of the partially esterified α-olefin-unsaturated carboxylic acid copolymer (α) is not critical. In general an α-olefin and an unsaturated carboxylic acid or its acid anhydride as set out above are reacted with each other to obtain a copolymer, after which the carboxlic acid groups are partially esterified with an alcohol. Also, an ester of an unsaturated carboxylic acid may be used in an appropriate amount as an unsaturated carboxylic acid ingredient for reaction with an α-olefin. In this case, other copolymerizable ingredients with the α-olefin and/or unsaturated carboxylic acid ingredients may be used in combination in small amounts for copolymerization.

Of the partially esterified α-olefin-unsaturated carboxylic acid copolymers (α), a partially esterified copolymer obtained from an α-olefin and maleic anhydride is preferred.

It is preferred that the non-partially-esterified product or α-olefin-unsaturated carboxylic acid copolymer (β) has an average molecular weight of 1000 - 100000.

The molar ratio of the α-olefin units and the unsaturated carboxylic acid units in the copolymer is preferably in the range of 1:4 - 4:1.

The alcohol ingredients used for the partial esterification are preferably alcohols or polyhydric alcohols having 2 - 100 carbon atoms, or ether compounds thereof, more preferably still those alcohols having 4 - 30 carbon atoms. Polyalkylene oxide glycols and ethers thereof such as, for example, polyethylene glycol and its methyl ether, are preferred alcohol ingredients.

Preferably polyalkylene oxide glycols and ethers thereof are polyethylene oxide glycols having 1 - 30, more preferably 1 - 12 carbon atoms, ethylene oxide units, and ethers thereof. More preferably, polyethylene oxide glycol ether is used.

In the partially esterified α-olefin-unsaturated carboxylic acid copolymers (α), the ratio of esterified carboxylic acid groups and non-esterified carboxylic acid groups is preferably 1:9 - 9:1, more preferably 3:7 - 7:3.

The salt of the partially esterified α-olefin-unsaturated carboxylic acid copolymer used as the (B) ingredient is one which makes use of the above-described partially esterified copolymer (α) which is neutralized at an arbitrary ratio or excessively with metal bases, organic bases or the like at the non-esterified carboxylic acid groups.

For the metal bases, all the metals selected from Groups Ia, IIa, IIb, IIIa and IVa of the Periodic Table may be used. Preferably, there are mentioned bariums, cadmium, calcium, magnesium, lead, tin, aluminium and zinc. Alternatively, combinations of different types of metals such as barium and zinc, magnesium and zinc, and the like may be used. A metal selected from sodium and potassium is also preferred.

Another preferred salt of the partially esterified product of the α-olefin-unsaturated carboxylic acid copolymer is one which is obtained by partial, complete or excessive neutralization with ammonia, amines or alkanolamines. Preferably, there are mentioned stoichiometrically formed dimethylethanolamine salts, i.e. salts obtained by reaction between 2.5 moles of dimethyl ether amine and 1 mole of a fundamental acid.

A better effect will result when the composition of the invention is used in combination with conventionally employed nucleating agents such as, for example, talc, boron nitride and the like, crystallization promoters and plasticizers.

Further, reinforcing agents such as glass fibres, carbon fibres, wollastonite, whiskers and the like may be added to the composition of the invention. When glass fibres are added to the composition in an amount of 5 - 60 wt%, the mechanical properties of the composition are improved. Moreover, flame retardants, UV absorbers, antioxidants, colourants, hydrolysis-proof agents, and other thermoplastic resins may be formulated.

The thermoplastic polyester resin composition of the invention can be prepared by any known technique. For instance, (A) and (B) ingredients and, if necessary, arbitrary ingredients are mixed in an appropriate mixer and melt kneaded with an extruder, a kneader or the Banbury mixer.

The composition of the invention is rapidly crystallized at relatively low temperatures. For instance, where polyethylene terephthalate is used as the (A) ingredient, the composition is uniformly crystallized when moulded at a mould temperature of not higher than 90°C. Accordingly, the resultant moulding article has a good surface gloss with good impact strength and mechanical strength and does not suffer bleeding-out of any additive under high temperature conditions.

3

The reason why the composition of the invention has such good characteristics is not clearly known but it is believed that the alcohol or polyhydric alcohol or ether compound thereof and ions forming the metal salt bonded to the (B) ingredient through esterification facilitate miscibility with polyester (A); and the α-olefin moiety serves well as a nucleus forming agent to form a specific phase structure where the moieties are coagulated.

The invention is further described, by way of specific example only, with reference to the following Examples and Comparative Examples.

Namely Examples 1 - 4 and Comparative Examples 1 - 4

Polyethylene terephthalate was used as (A) ingredient and dry blended with (B) ingredient and the additional ingredients indicated in Table 1. The compositions were subjected to melt kneading with an extruder at 280°C to obtain pellet-shaped compositions.

The (B) ingredient used was obtained by partially esterifying a copolymer (average molecular weight 2650) of a $C_{14-16}$ α-olefin and maleic anhydride at 1/1 (molar ratio) with polyethylene glycol monomethyl ether (molecular weight 350), and converting non-esterified carboxylic acid groups into an aluminium salt.

The thus obtained pellet-shaped composition was evaluated according to the following procedures. The results are shown in Table 1.

Crystallization Promoting Effect

The pellets were molten at 290°C and rapidly cooled to 150°C, 120°C, 90°C or 60°C to obtain samples. These samples were heated at a rate of 10°C/minute by means of a differential scanning calorimeter (DSC) made by Perkin-Elmer Inc. An area of an exothermic peak of from 60°C to 150°C ($\Delta H_{oo}$, crystallization) and an area of an endothermic peak of from 160°C to 290°C ($\Delta H_o^{290}$ melt) were measured to evaluate the effect as $\Delta H_{oo}/\Delta H_o^{290}$. A smaller $\Delta H_{oo}/\Delta H_o^{290}$ value and particularly, a smaller value of a sample obtained by rapidly cooling to a lower temperature, results in a lower mould temperature.

Surface Gloss of Moulding Product

Pellets were dried with hot air at 130°C for 10 hours and moulded into a 50x70x3 (mm) flat sheet by means of an injection moulding machine at a resin temperature of 280°C, an injection pressure of 400 - 600 kg/cm$^2$, a mould temperature of 60°C, a cooling time of 20 seconds and a moulding cycle of 40 seconds. The resultant sheets were visually observed and evaluated with respect to the gloss and uniformity.

Table 1

| | | Example 1 | Example 2 | Example 3 | Example 4 | Comparative Example 1 | Comparative Example 2 | Comparative Example 3 | Comparative Example 4 |
|---|---|---|---|---|---|---|---|---|---|
| Composition (parts by weight) | polyethylene terephthalate (A) | 100 | 100 | 100 | 100 | 100 | 100 | 100 | 100 |
| | hindered phenol | 0.2 | 0.2 | 0.2 | 0.2 | 0.2 | 0.2 | 0.2 | 0.2 |
| | phosphorus compound | 0.15 | 0.15 | 0.15 | 0.15 | 0.15 | 0.15 | 0.15 | 0.15 |
| | glass fibers | 43 | 43 | 43 | 43 | 43 | 43 | 43 | 43 |
| | compound (B) defined by invention | 0.3 | 0.3 | 0.3 | 0.3 | – | – | – | – |
| | talc | – | 0.1 | – | 0.1 | – | 0.1 | – | 0.1 |
| | aliphatic acid amine plasticizer | – | – | 1.0 | 1.0 | – | – | 1.0 | 1.0 |
| physical properties | $\Delta H_{cc}/\Delta H_m$ ($\times 100$) 150°C | 0 | 0 | 0 | 0 | 0 | 0 | 0 | 0 |
| | 120°C | 0 | 0 | 0 | 0 | 81 | 20 | 35 | 12 |
| | 90°C | 6 | 4 | 5 | 3 | 85 | 24 | 39 | 16 |
| | 60°C | 12 | 8 | 9 | 7 | 92 | 35 | 56 | 25 |
| | Surface Gloss | good | good | good | good | bad | slightly bad | bad | slightly bad |

Effect of the Invention

As will be apparent from the description of the invention and Examples, the thermoplastic polyester resin composition of the invention has a high crystallization rate and a high crystallization temperature, so that when it is moulded in a low temperature mould, crystallization proceeds satisfactorily and there can be obtained moulding products which have good impact strength, rigidity, and surface gloss without suffering from bleed-out. Forming cycle can also be improved.

Thus, the composition of the invention is very useful from the industrial viewpoint and is particularly suitable for injection moulding.

**Claims**

1. A thermoplastic polyester resin composition characterised in that it comprises:
   (A)100 parts by weight of a thermoplastic polyester resin; and
   (B)0.001 - 25 parts by weight of a salt of an $\alpha$-olefin-unsaturated carboxylic acid copolymer ($\beta$).

2. A thermoplastic polyester resin composition according to claim 1 wherein the $\alpha$-olefin-unsaturated carboxylic acid copolymer ($\beta$), has an average molecular weight of 1000 - 100000.

3. A thermoplastic polyester resin composition according to claim 1 or 2 wherein the molar ratio of the $\alpha$-olefin component and the unsaturated carboxylic acid component of the copolymer ($\beta$) is in the range of 1:4 - 4:1.

4. A thermoplastic polyester resin composition according to claim 1 wherein some of the carboxylic acid groups of the $\alpha$-olefin-unsaturated carboxylic acid copolymer ($\beta$) are esterified giving rise to a partially esterified copolymer ($\alpha$).

5. A thermoplastic polyester resin composition according to claim 4 wherein the $\alpha$-olefin component of the partially esterified copolymer ($\alpha$) contains 6 to 40 carbon atoms.

6. A thermoplastic polyester resin composition according to claim 4 or 5 wherein the partially esterified copolymer ($\alpha$) has been partially esterified with an alcohol, a polyhydric alcohol or an ether thereof.

7. A thermoplastic polyester resin composition according to any of claims 4, 5 or 6 wherein the partially esterified copolymer ($\alpha$) has been partially esterified with a polyalkylene oxide glycol or an ether thereof.

8. A thermoplastic polyester resin composition according to any of claims 4 to 7 wherein a ratio between the esterified carboxylic acid units and the non-esterified carboxylic acid units in the partially esterified copolymer ($\alpha$) is in the range of 3:7 - 7:3.

9. A thermoplastic polyester resin composition according to any of claims 4 to 8 wherein the sale of the partially esterified copolymer ($\alpha$) is a metal salt containing at least one metal selected from barium, cadmium, calcium, magnesium, lead, tin, aluminium and zinc.

10. A thermoplastic polyester resin composition according to any of claims 4 to 8 wherein the salt of the partially esterified copolymer ($\alpha$) is a metal salt containing at least one metal selected from the group Ia metals of the Periodic Table.

11. A thermoplastic polyester resin composition according to claim 10 wherein the metal is sodium and/or potassium.

12. A thermoplastic polyester resin composition according to any of claims 4 to 8 wherein the salt of the partially esterified copolymer ($\alpha$) is an ammonium salt and/or a salt obtained by neutralization or excessive neutralization with an alkanolamine.

13. A thermoplastic polyester resin composition according to any of claims 1 to 12 wherein the thermoplastic polyester resin (A) is a copolymerized polyester containing a polyethylene terephthalate of not less than 80 mole% of recurring units of ethylene terephthalate.

14. A thermoplastic polyester resin composition according to any of claims 1 to 13 further comprising one or more selected from the group consisting of nucleating agents, crystallization promoting agents and plasticizers.